# EUROPÄISCHE PATENTSCHRIFT

(11) **EP 2 116 448 B1**
(45) Veröffentlichungstag und Bekanntmachung des Hinweises auf die Patenterteilung: **10.07.2013**
(21) Anmeldenummer: 08103902.6
(22) Anmeldetag: 09.05.2008
(51) Int. Cl.: B62D 25/20, B62D 29/04, B62D 33/04, B60P 7/08, B60P 7/14

(54) **Paneel für einen Kofferaufbau mit einer Schiene zum Befestigen von Zusatzeinrichtungen**
Panel for a box body with a rail for fixing additional devices
Panneau pour une construction de coffre doté d'un rail de fixation de dispositifs supplémentaires

(43) Veröffentlichungstag der Anmeldung: 11.11.2009
(73) Patentinhaber: Schmitz Cargobull AG, 48341 Altenberge (DE)
(72) Erfinder: Heßling, Alfons, 48683 Ahaus (DE); Küpers, Josef, 48703 Stadtlohn (DE); Lünenborg, Stefan, 46325 Weseke (DE); Vilain, Thomas, 46342 Velen (DE)
(74) Vertreter: Cohausz & Florack

(56) Entgegenhaltungen:
- EP-A- 1 342 649
- WO-A-00/17036
- WO-A-2006/091794
- DE-A1- 2 227 132
- DE-A1- 10 110 996

## Beschreibung

Die Erfindung betrifft ein Paneel, insbesondere Seitenwand-, Dach- und/oder Bodenpaneel, für einen Kofferaufbau eines Lastkraftwagens, Aufliegers und/oder Anhängers, mit wenigstens einer Schiene zum Befestigen von Zusatzeinrichtungen des Kofferaufbaus, wobei die Schiene mittels eines Klebstoffs über eine stoffschlüssige Verbindung an dem Paneel fixiert ist.

Kofferaufbauten mit entsprechenden Paneelen sind in unterschiedlichen Ausführungen bekannt. Die Paneele weisen dabei in der Regel eine dünne innere und eine dünne äußere Decklage aus Stahl oder Kunststoff auf, zwischen denen ein Kernbereich im Wesentlichen aus einem geschäumten Kunststoff vorgesehen ist, um die Isolationseigenschaften des Paneels zu verbessern. Man spricht in diesem Zusammenhang auch von einer Sandwichbauweise.

Die mit dem Paneel verbundene Schiene kann dabei unterschiedlichen Zwecken dienen, etwa der variablen Montage von Trennwänden, von quer verlaufenden Trägerelementen zum Einziehen einer zusätzlichen Etage in den Kofferaufbau beim Beladen mit Paletten, von Ladungssicherungseinrichtungen, wie Spanngurten und dergleichen, sowie von Einrichtungen zum hängenden Transport bestimmter Güter. Zur Montage der Schienen werden Vertiefungen in die innere Decklage des Paneels eingebracht, welche im Wesentlichen den äußeren Abmessungen der Schienen entsprechen. In diese Vertiefungen werden dann die Schienen so eingeklebt, dass sie bündig mit der inneren Decklage des Paneels abschließen. Über die großflächige Verklebung von Schiene und innerer Decklage wird eine stabile und dauerhafte Verbindung geschaffen.

Ein gattungsgemässes Dokument ist bereits bekannt, zum Beispiel EP0124807 beschreibt so ein Paneel, mit Schaumkern und inneren und äußeren Decklage, mit einer Schiene welche unmittelbar über eine formschlüssige, kraftschlüssige und reibschlüssige Verbindung an der inneren Decklage fixiert ist.

Dennoch besteht weiterer Optimierungsbedarf hinsichtlich der Fertigung der Paneele. Nach dem Verkleben von Schiene und innerer Decklage muss nämlich zunächst abgewartet werden, bis der Klebstoff so weit ausgehärtet ist, dass die Schiene bei nachfolgenden Montageschritten in Position bleibt und das Aushärten des Klebstoffs nicht beeinträchtigt wird. Um die Fertigung der Paneele zu beschleunigen, können zwar Schraubzwingen oder dergleichen angebracht werden, die die Schiene während der nachfolgenden Fertigungsschritte trotz des noch nicht ausreichend ausgehärteten Klebstoffs in der gewünschten Position halten. Dies ist jedoch sehr umständlich und erfordert zusätzliche Montageschritte.

Der vorliegenden Erfindung liegt daher die Aufgabe zu Grunde, ein Paneel derart auszugestalten und weiterzubilden, dass die Fertigung des Paneels schneller und kostengünstiger erfolgen kann.

Diese Aufgabe ist bei einem Paneel nach dem Oberbegriff des Anspruchs 1 dadurch gelöst, dass die Schiene selbst unmittelbar über eine separate formschlüssige, kraftschlüssige und/oder reibschlüssige Verbindung am Paneel fixiert ist.

Die Erfindung hat erkannt, dass sich die erforderlichen Montagezeiten für die entsprechenden Paneele erheblich verkürzen lassen, wenn die Schiene zusätzlich zum Einkleben noch durch eine nicht stoffschlüssige Verbindung am Paneel fixiert wird, wobei diese zusätzliche Verbindung stark genug ist, um die Schiene so lange in der gewünschten Position zu halten und den Klebstoff zu entlasten, bis der Klebstoff hinreichend ausgehärtet ist, auch wenn sich dem Verbinden von Schiene und Paneel unmittelbar weitere Montageschritte anschließen. Die noch nicht ausgehärtete Verbindung wird also entlastet, so dass der Klebstoff in aller Ruhe aushärten kann, ohne dass die weitere Montage dabei ruhen müsste.

Die nicht stoffschlüssige Verbindung muss dabei nur die während der Fertigung auftretenden Kräfte aufnehmen können. Die beim Betrieb des Kofferaufbaus, etwa beim Verzurren von Ladung, auftretenden Kräfte werden vorwiegend von der dann vollständig ausgehärteten, stoffschlüssigen Verbindung aufgenommen. Es kann also auf relativ einfache, nicht stoffschlüssige Verbindungen zurückgegriffen werden. Zudem muss die zusätzliche, nicht stoffschlüssige Verbindung nachträglich nicht durch einen separaten Arbeitsschritt entfernt werden. Die stoffschlüssige Verbindung kann stattdessen ohne weiteres neben der zusätzlichen, nicht stoffschlüssigen Verbindung bestehen bleiben.

Wesentlich ist, dass es sich bei der zusätzlichen, nicht stoffschlüssigen Verbindung um eine unmittelbare durch die Schiene selbst etablierte Verbindung handelt. Es bedarf daher keiner Hilfsfügeelemente wie Schraubzwingen, Nieten, Schrauben und dergleichen. Die Verbindung wird vielmehr direkt durch die Schiene, insbesondere durch die Gestaltung der Schiene, einerseits und das Paneel anderseits geschaffen. Zusätzliche, ausschließlich der Verbindung dienende Zusatzelemente sind nicht erforderlich.

Wenn vorliegend von einer separaten formschlüssigen, kraftschlüssigen und/oder reibschlüssigen Verbindung die Rede ist, kann dies bedeuten, dass es sich um eine von der stoffschlüssigen Verbindung räumlich getrennte Verbindung handelt. Dies ist jedoch nicht zwingend. Es handelt sich aber jedenfalls um eine weitere Verbindung, die eigenständig ist, jedenfalls bis zum Aushärten des Kunststoffs der stoffschlüssigen Verbindung. Auch Clinch- und Tox-Verbindungen kommen hierbei in Betracht.

Obwohl es grundsätzlich zu einem zusätzlichen Aufwand führt, die Schiene auf zwei unterschiedliche Arten mit dem Paneel zu verbinden, wurde dennoch überraschend festgestellt, dass erfindungsgemäß ein schnelleres und damit wesentlich kostengünstigeres Montieren der mit Schienen ausgerüsteten Paneele ermöglicht wird.

Bei einer ersten Ausgestaltung des Paneels ist die Schiene über eine unlösbare Rastverbindung formschlüssig am Paneel fixiert. Mit derartigen Verbindungen können hohe Kräfte aufgenommen werden. Zudem lassen sich solche Verbindungen sehr schnell und unkompliziert, etwa durch bloßes Ineinanderstecken bzw. Ineinanderklipsen, etablieren. Die Schiene und das Paneel müssen dabei lediglich entsprechende, korrespondierende Rastmittel aufweisen, die beim Montieren der Schiene einander hintergreifen.

Alternativ oder zusätzlich kann die Schiene in einer Öffnung einer inneren Decklage des Paneels vorgesehen sein. Damit kann einerseits auf das Ausgestalten von Vertiefungen in der inneren Decklage verzichtet werden, um ein bündiges Einsetzen von Schienen in ein Paneel zu ermöglichen. Andererseits kann der Rand der Öffnung der zusätzlichen, nicht stoffschlüssigen Verbindung zwischen der Schiene und dem Paneel dienen. So kann bedarfsweise aber auch eine Verbindung der Schiene mit dem Kernbereich des Paneels vorgesehen sein.

Bei der inneren Decklage handelt es sich vorwiegend um eine dünne Innenhaut des Paneels aus Metall oder Kunststoff, welche den Abschluss des Paneels in Richtung des Inneren des Kofferaufbaus bildet. Die Öffnung ist zudem vorzugsweise zur Aufnahme der Schiene in die innere Decklage eingebracht und entspricht daher von ihren Abmessungen etwa den äußeren Abmessungen der Schiene. Die Öffnung ist folglich länglich.

Im Zusammenhang mit der Befestigung der Schiene an der inneren Decklage des Paneels kann die inneren Decklage des Paneels nach innen umgebogene Stege aufweisen, wobei die Schiene über die nach innen umgebogenen Stege an dem Paneel fixiert ist. Dabei definieren die nach innen umgebogenen Stege mit ihren freien Enden oder Rändern eine längs zur Schiene verlaufende Öffnung in der inneren Decklage, in der die Schiene angeordnet ist.

Die Stege sind längs der Öffnung vorgesehen. An den Stirnseiten der Öffnung können ebenfalls die Öffnung begrenzende Stege vorgesehen sein. Erforderlich ist dies jedoch nicht. Über die Stege kann dabei eine ausreichend feste Verbindung zwischen der Schiene und dem Paneel etabliert werden. Außerdem erlaubt dies ohne weiteres ein Einpassen der Schiene in die Öffnung der inneren Decklage, wobei die Schiene auf der Innenseite des Paneels bündig mit der inneren Decklage abschließt. Die Stege können dabei auch eine ausreichende Oberfläche zum Verkleben der Schiene mit dem Paneel zur Verfügung stellen. Besonders einfach kann die Schiene dann mit den Innenseiten der Stege verklebt sein. Die Schiene weist in diesem Fall mit den Stegen korrespondierend ausgebildete Klebeflächen auf.

Es versteht sich, dass die Stege bei einer inneren Decklage nicht tatsächlich nach innen umgebogen sein müssen. Wenn dies materialbedingt nicht ohne Weiteres möglich ist, kann die innere Decklage auch ursprünglich mit nach innen gerichteten Stegen hergestellt, z.B. spritzgegossen, werden. Auch die nach innen gerichteten, niemals umgebogenen Stege sind dann umgebogene Stege im Sinne der Erfindung.

Insbesondere wenn die Schiene mit den Innenseiten der nach innen umgebogenen Stege verklebt ist, weist die Schiene vorzugsweise über die Breite der Öffnung hinausragende, zu beiden Seiten nach außen hervorstehende Wülste auf. Dann kann der Klebstoff ohne weiteres bereits an der Schiene angebracht sein, während die Schiene in die innere Decklage eingebracht bzw. eingeschoben wird. Die Wülste an beiden Seiten der Schiene bewirken nämlich beim Einschieben der Schiene in das Paneel eine Aufweitung des Abstands zwischen den Stegen. Mit anderen Worten drücken die Wülste die Stege der inneren Decklage nach außen und damit weg von dem bereits aufgebrachten Klebstoff. Dieser wird demzufolge beim Einbringen der Schiene nicht durch die Stege von den zu verklebenden Flächen der Schiene abgestreift. Nach dem Durchgreifen bzw. Eingreifen der Wülste in die Öffnung können sich die Stege wieder geringfügig aufeinander zu bewegen, wozu sie vorzugsweise in geringem Maße federnd ausgebildet sind, so dass man dann von einem geringfügigen Zurückfedern sprechen kann. Damit gelangen die Stege erst in der endgültigen Position der Schiene mit den korrespondierenden Klebeflächen der Schiene in Kontakt.

Damit beispielsweise die Schiene auf die zuvor beschriebene Art in die Öffnung der inneren Decklage eingebracht werden kann, wobei die Klebeflächen mehr oder weniger erst nach dem Erreichen der endgültigen Positionen mit der Schiene mit deren Klebeflächen in Kontakt kommen, sind die Stege vorzugsweise gegenüber der übrigen inneren Decklage des Paneels um weniger als 90° umgebogen, wobei sich die Stege mit zunehmenden Abstand von der inneren Decklage einander annähern. Beim Einschieben einer mit Wülsten versehenen Schiene zwischen die Stege könnten derartige Stege ohne weiteres durch die Wülste aufgeweitet bzw. kurzfristig weiter gegenüber der übrigen inneren Decklage des Paneels umgebogen werden. Zudem würden derartige Stege zu einem selbständigen Zentrieren der Schiene in der Öffnung führen, da die Stege zugleich eine Führung der Schiene beim Einbringen in das Paneel gewährleisten würden.

Die Flanken der Stege können bedarfsweise auch Abschnitte mit unterschiedlichen Winkeln zur Paneelebene aufweisen, wobei der Winkel der Flanken vorzugsweise umso größer ist, je weiter die Flanke von der Innenseite des Paneels entfernt ist.

Neben oder alternativ zu einer formschlüssigen Verbindung zwischen der Schiene und den Stegen der inneren Decklage kann die Schiene mit den Stegen auch kraftschlüssig und/oder reibschlüssig verbunden sein. Die Stege übernehmen bedarfsweise also eine Doppelfunktion, wobei die Schiene einfach und zuverlässig auch durch eine nicht stoffschlüssige Verbindung an den Stegen befestigt werden kann.

In diesem Zusammenhang kann es zweckmäßig sein, wenn die Stege eine Vorspannung in Richtung auf die Schiene aufweisen. In diesem Falle können insbesondere durch eine reibschlüssige Verbindung zwischen der Schiene und den Stegen höhere Kräfte aufgenommen werden, da die Stege dann infolge der Vorspannung stärker gegen die korrespondierenden Anlageflächen an der Schiene drücken.

Alternativ oder zusätzlich kann auch vorgesehen sein, dass die Stege mit der Schiene unlösbar verrastet sind. Dies kann bei einer Schiene mit seitlich abstehenden Wülsten etwa derart erfolgen, dass die Stege, nachdem die Wülste der Schiene in die Öffnung eingreifen, zurückfedern und so in Hinterschneidungen unterhalb der Wülste eingreifen. Die Stege verhindern dann ein erneutes Herausziehen der Schiene. Aber auch wenn die Schiene keine Wülste aufweist, kann eine Rastverbindung dadurch erreicht werden, dass die Stege eine Vorspannung in Richtung auf die Schiene aufweisen, so dass die Stege auf diese Weise in entsprechende Hinterschneidungen der Schiene gelangen.

Die formschlüssige Verbindung zwischen der Schiene und dem Paneel ist dann besonders stabil, wenn die zu beiden Seiten nach außen hervorstehenden Wülste der Schiene auf den Stegen aufliegen. Vorzugsweise liegen die Wülste dabei auf den die Öffnung begrenzenden Kanten oder Rändern der Stege auf. Dann müssten die Stege knicken, damit sich die Schiene aus dem Paneel lösen kann.

Alternativ oder zusätzlich können die zu beiden Seiten nach außen hervorstehenden Wülste auch wenigstens abschnittsweise gegen die Stege verstemmt sein. Dabei werden die Wülste vorzugsweise um die Stege herum gebogen und gegen die Stege verpresst. Durch diese sehr stabile Verbindung wird die Gefahr einer ungewollten Verschiebung der Schiene gegenüber dem Paneel vor dem endgültigen Aushärten des Klebstoffs weiter verringert.

Nach einer weiteren Ausgestaltung weist die Schiene angrenzend zu den Stegen der inneren Decklage wenigstens eine Tasche zur Aufnahme von Klebstoff auf. Diese Tasche kann sich bedarfsweise entlang der gesamten Schiene erstrecken. Es können auch mehrere vorzugsweise parallel zueinander ausgerichtete Taschen vorgesehen sein. Angrenzend zu der wenigstens einen Tasche kann die Schiene Anlageflächen zur beispielsweise reibschlüssigen Anlage an die Innenseite des benachbarten Stegs aufweisen, wodurch eine platzsparende Konstruktion erreicht wird.

Eine weitere Fixierung der Schiene am Paneel kann dadurch erreicht werden, dass die Rückseite der Schiene im Paneel eingeschäumt ist. Der Schaum und die Schiene gehen dabei vorzugsweise ebenfalls eine stoffschlüssige Verbindung ein.

Sofern die Schiene Rasteröffnungen zum Fixieren von speziellen Einrichtungen an der Schiene aufweist, weist die Schiene vorzugsweise an ihrer Rückseite eine Kappe zum Verschließen der Rasteröffnungen auf. Ansonsten könnte der Schaum durch die Rasteröffnungen nach außen gelangen und in die Schiene eindringen.

Nachfolgend wird die Erfindung anhand von einer lediglich ein Ausführungsbeispiel darstellenden Zeichnung näher erläutert. In der Zeichnung zeigt
- Fig. 1: einen Lastkraftwagen mit einem Auflieger, der einen ein erfindungsgemäßes Paneel aufweisenden Kofferaufbau trägt,
- Fig. 2: ein Detail des Paneels aus Fig. 1 im Bereich einer in das Paneel eingebrachten Schiene in einer Draufsicht auf die innere Decklage des Paneels,
- Fig. 3: das Detail aus Fig. 2 in einer Schnittansicht gemäß der Ebene III-III aus Fig. 2 und
- Fig. 4: das Detail aus Fig. 2 in einer Schnittansicht gemäß der Ebene IV-IV aus Fig. 2.

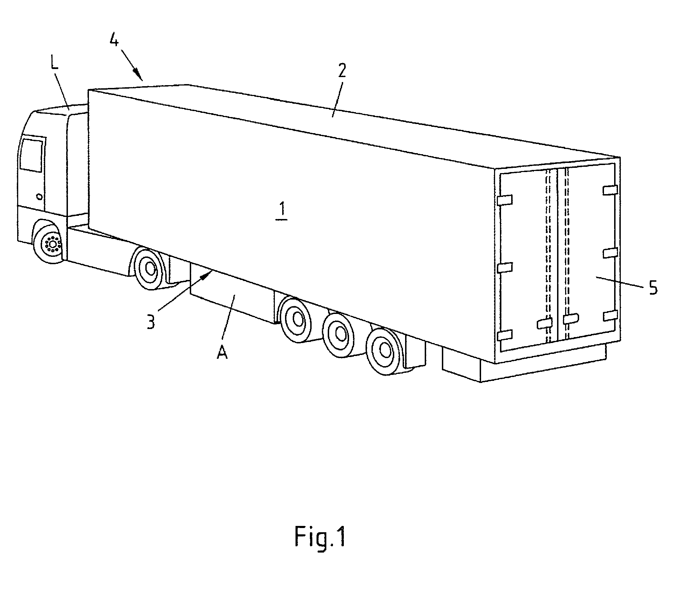

In der Fig. 1 ist ein Lastkraftwagen L mit einem Auflieger A dargestellt, der einen Kofferaufbau K trägt. Der Kofferaufbau K könnte aber alternativ auch direkt auf einem Lastkraftwagen oder auf einem gewöhnlichen Anhänger für einen Lastkraftwagen montiert sein. Der Kofferaufbau K ist aus unterschiedlichen Paneelen, wie zwei Seitenwandpaneelen 1, einem Dachpaneel 2, einem Bodenpaneel 3, einem Stirnwandpaneel 4 und einem Rückwandpaneel 6 zusammengesetzt. Die Paneele weisen eine mehrlagige oder mehrschichtige Struktur auf, was prinzipiell bevorzugt aber nicht zwingend ist.

Bei dem dargestellten und insoweit bevorzugten Kofferaufbau K ist in die beiden Seitenwandpaneele 1 jeweils eine Schiene 6 eingelassen, bei der es sich um eine sogenannte Doppelstockschiene handelt. Diese Doppelstockschienen dienen der Aufnahme von die beiden Seitenwandpaneele 1 miteinander verbindenden Querträgern. Auf diese Querträger können Paletten oder dergleichen in einer oberen, von dem Bodenpaneel 3 beabstandeten Etage geladen werden. Es könnte sich prinzipiell bei den Schienen auch um eine andere aus dem Stand der Technik bekannte Art Schiene handeln.

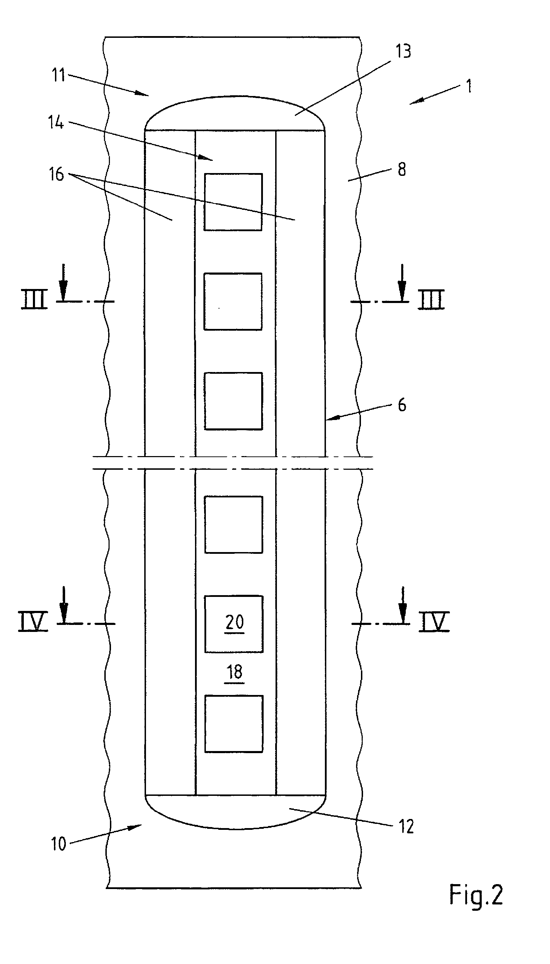

In der Fig. 2 ist die Schiene 6 in einer Draufsicht mit dem angrenzenden Bereich des Seitenwandpaneels 1 dargestellt. Die Schiene 6 ist bündig in die innere Decklage 8 des Seitenwandpaneels 1 eingelassen. Die äußeren Enden 10,11 der Schiene in Längsrichtung sind mit Kopfstücken 12,13 versehen, die einen guten Abschluss zur inneren Decklage 8 sicherstellen, insbesondere wenn die Kopfstücke 12,13 mit dem Paneel, vorzugsweise mit Kopfseitig vorgesehenen Stegen der inneren Decklage 8 verrastet sind. Die dargestellte und insoweit bevorzugte Schiene 6 ist aus Metall hergestellt, während die Kopfstücke 12,13 aus Kunststoff gefertigt sind. Bei der Schiene 6 handelt es sich insbesondere um ein Strangpressprofil aus Aluminum.

Die Schiene 6 weist eine innere Nut 14 auf, die auf der Ebene der inneren Decklage 8 durch zwei seitliche, einander gegenüberliegende Rippen 16 der Schiene 6 verengt ist, so dass sich im Querschnitt der Schiene 6 eine T-förmige Nut 14 ergibt. Die Schiene könnte bedarfsweise aber auch eine anders geformte Nut aufweisen. Im Nutgrund 18 weist die Schiene zudem recheckige, durchgehende Rasteröffnungen 20 auf, in denen Querträger auf unterschiedlichen Höhen verrastet werden können.

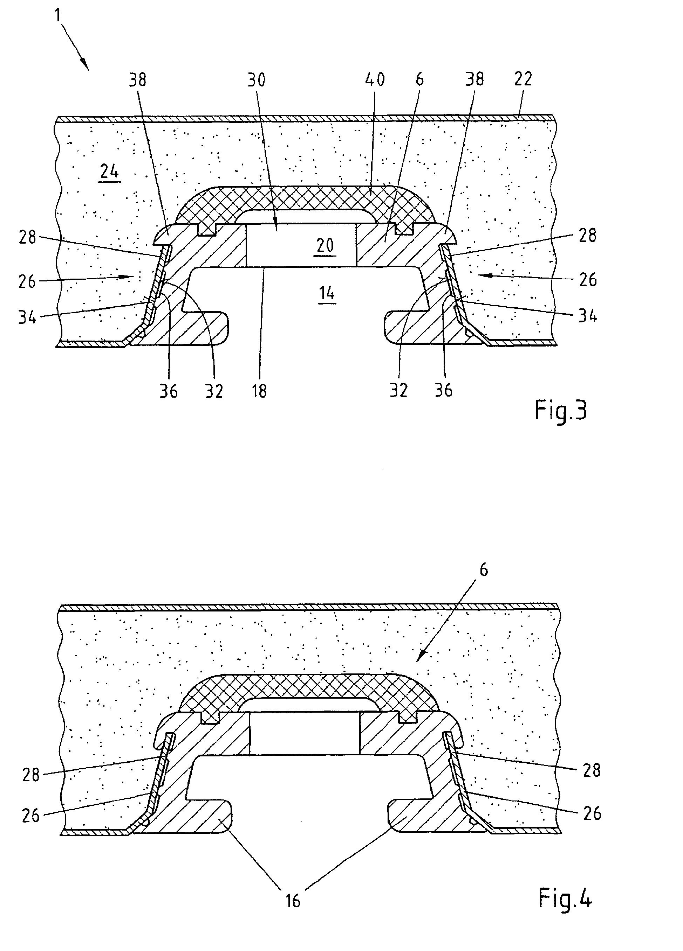

In der Fig. 3 ist ein Schnitt senkrecht durch die Schiene 6 und das angrenzende Seitenwandpaneel 1 dargestellt. In der Darstellung der Fig. 3 ist oben die nach außen weisende äußere Decklage 22 des Seitenwandpaneels 1 und unten die nach innen weisende innere Decklage 8 des Seitenwandpaneels 1 angeordnet. Dazwischen befindet sich ein mit einem Polyurethanschaum ausgeschäumter Kernbereich 24 des Seitenwandpaneels 1 sowie die Schiene 6. Die Schiene 6 ist der besseren Übersichtlichkeit in Bezug zur Dicke des Seitenwandpaneels 1 etwas vergrößert dargestellt.

Die innere Decklage 22 ist zu beiden Seiten der Schiene 6 nach innen in den Kernbereich 24 des Seitenwandpaneels 1 hinein umgebogen, so dass sich entsprechende Stege 26 von der Innenseite des Seitewandpaneels 1 in den Kernbereich 24 hinein erstrecken. Die Stege 26 weisen freie Enden bzw. Kanten 28 auf, die eine in der inneren Decklage 8 vorgesehene Öffnung 30 seitlich begrenzen.

In die Öffnung 30 der inneren Decklage 8 ist die Schiene 6 eingefügt, die über einen Klebstoff mit den Innenseiten der Stege 26 stoffschlüssig verbunden ist. Dabei weisen die Stege 26 innere Flanken 32 auf, welche hinsichtlich ihrer Ausrichtungen und Abmessungen den äußeren Flanken 34 der Schiene 6 entsprechen. Bei dem dargestellten und insoweit bevorzugten Ausführungsbeispiel weisen die äußeren Flanken 34 der Schiene 6 und die inneren Flanken 32 der Stege 26 jeweils zwei Abschnitte mit unterschiedlicher Steigung bzw. Neigung auf, wobei der Winkel dieser Abschnitte zur Innenseite des Seitenwandpaneels 1 mit zunehmendem Abstand zur Innenseite des Seitenwandpaneels 1 zunimmt.

In den Flanken 34 der Schiene 6 sind Taschen 36 eingelassen, die parallel zueinander angeordnet sind und sich im Wesentlichen über die gesamte Länge der Schiene 6 erstrecken.

In diesen Taschen 36 wird vor dem Verbinden der Schiene 6 mit dem Seitenwandpaneel 1 ein Klebstoff eingebracht. Die Taschen 36 sind durch hervorstehende Kanten voneinander getrennt, die an dem korrespondierenden Stegen 26 anliegen. Auf diese Weise wird vermieden, dass der zuvor vorgesehene Klebstoff nahezu vollständig aus dem Verbindungsbereich zwischen der Schiene 6 und den Stegen 26 herausgedrückt wird. Es bleibt also stets genügend Klebstoff vorhanden, um eine stabile Verbindung sicherzustellen.

Zudem wird ein Abstreifen des Klebstoffs beim Einbringen der Schiene 6 in das Seitenwandpaneel 1 verhindert, da die Schiene 6 an gegenüberliegenden Seiten seitlich nach außen hervorstehende Wülste 38 aufweist, die beim Einschieben der Schiene 6 in das Seitewandpaneel 1 die Stege 26 nach außen biegen und so den Abstand zwischen den Stegen 26 kurzzeitig vergrößern. Infolge dessen kommen die Stege 26 erst mit den korrespondierenden Abschnitten der Schiene 6 in Kontakt, nachdem die Wülste 38 vollständig in die Öffnung 30 eingreifen. Dies entspricht im Wesentlichen der endgültigen Position der Schiene 6 in Bezug zum Seitenwandpaneel 1.

Die Wülste 38 der Schiene 6 könnten seitlich nach außen auch gegenüber den mit den Stegen 26 zu verklebenden Abschnitten der äußeren Flanken 34 der Schiene 6 hervorstehen, um ein Abstreifen des Klebstoffs sicher zu vermeiden. Beim dargestellten und insoweit bevorzugten Ausführungsbeispiel ist dies jedoch nicht erforderlich, da die Wülste 38 und die Flankenneigungen sowohl der Stege 26 als auch der Schiene 6 entsprechend aufeinander abgestimmt sind.

Neben der stoffschlüssigen Verbindung ist die Schiene 6 auch formschlüssig mit der inneren Decklage 8 des Seitenwandpaneels 1 verbunden. Die Kanten 28 der Stege 26 sind nach dem Durchstecken der Wülste 38 in die Öffnung 30 der inneren Decklage 8 zurückgefedert und dabei unter Hinterschneidungen der Wülste 38 gelangt, die ein nachträgliches Herausziehen der Schiene verhindern. Auf die beschriebene Weise wurde also eine unlösbare, dauerhafte Rastverbindung geschaffen.

Im Nutgrund 18 der Schiene 6 ist eine durchgehende Rasteröffnung 20 vorgesehen, in die korrespondierende Befestigungsmittel eingreifen können. Zur Rückseite hin ist die Schiene 6 daher über die schematisch dargestellte Kappe 40, die ein Eindringen von Polyurethanschaum beim Ausschäumen des Kernbereichs 24 zu Isolationszwecken in die Nut 14 der Schiene 6, d.h. also ein Austreten des Schaums verhindert.

Die Darstellung in der Fig. 4 entspricht im Wesentlichen der Darstellung in der Fig. 3. Allerdings sind in dem in der Fig. 4 dargestellten Abschnitt der Schiene 6 die Wülste 38 der Schiene 6 gegenüber den Stegen 26 verstemmt worden. Mit anderen Worten sind die Wülste 38 um die Ränder 28 der Stege 26 herum gebogen und gegen den Grundkörper der Schiene 6 verpresst worden. Dadurch wird eine kraft- und formschlüssige Verbindung durch plastisches Verformen der Werkstoffe, vorzugsweise sowohl der Schiene 6 als auch der Stege 26, erhalten. Infolge dieser sehr festen Verbindung ist diese bei dem dargestellten und insoweit bevorzugten Ausführungsbeispiel nur abschnittsweise in größeren Abständen vorgesehen.

## Patentansprüche

1. Paneel, insbesondere Seitenwandpaneel (1), Dachpaneel (2) und/oder Bodenpaneel (3), für einen Kofferaufbau (K) eines Lastkraftwagens (L), Aufliegers (A) und/oder Anhängers, mit einer inneren Decklage (8), einer äußeren Decklage (22), einem zwischen der inneren Decklage (8) und der äußeren Decklage (22) angeordneten aus geschäumten Kernbereich (24) und wenigstens einer Schiene (6) zum Befestigen von Zusatzeinrichtungen des Kofferaufbaus (K), wobei die Schiene (6) selbst unmittelbar über eine separate formschlüssige, kraftschlüssige und/oder reibschlüssige Verbindung an der inneren Decklage (8) fixiert ist, **dadurch gekennzeichnet, dass** die Schiene (6) mittels eines Klebstoffs über eine stoffschlüssige Verbindung an der inneren Decklage (8) fixiert ist.

2. Paneel nach Anspruch 1,
**dadurch gekennzeichnet, dass** die Schiene (6) über eine unlösbare Rastverbindung formschlüssig am Paneel fixiert ist.

3. Paneel nach Anspruch 1 oder 2,
**dadurch gekennzeichnet, dass** die Schiene (6) in einer Öffnung (30) einer inneren Decklage (8) des Paneels vorgesehen ist.

4. Paneel nach Anspruch 3,
**dadurch gekennzeichnet, dass** die innere Decklage (8) des Paneels nach innen umgebogene Stege (26) aufweist und dass die Schiene (6) über die nach innen umgebogenen Stege (26) am Paneel fixiert ist.

5. Paneel nach Anspruch 4,
**dadurch gekennzeichnet, dass** die Schiene (6) mit den Stegen (26), vorzugsweise mit den Innenseiten der Stege (26), stoffschlüssig verbunden ist.

6. Paneel nach Anspruch 5,
**dadurch gekennzeichnet, dass** die Schiene (6) über die Breite der Öffnung (30) hinausragende zu beiden Seiten nach außen hervorstehende Wülste (38) aufweist.

7. Paneel nach Anspruch 4 bis 6,
**dadurch gekennzeichnet, dass** die Stege (26) gegenüber der Ebene der inneren Decklage (8) des Paneels um weniger als 90° umgebogen sind und dass sich die Stege (26) mit zunehmendem Abstand zur inneren Decklage (8) einander annähern.

8. Paneel nach einem der Ansprüche 4 bis 7,
**dadurch gekennzeichnet, dass** die Schiene (6) mit den Stegen (26) formschlüssig, kraftschlüssig und/oder reibschlüssig verbunden ist.

9. Paneel nach Anspruch 8,
**dadurch gekennzeichnet, dass** die Stege (26) eine Vorspannung in Richtung auf die Schiene (6) aufweisen.

10. Paneel nach Anspruch 8 oder 9,
**dadurch gekennzeichnet, dass** die Stege (26) mit der Schiene (6) unlösbar verrastet sind.

11. Paneel nach einem der Ansprüche 8 bis 10,
**dadurch gekennzeichnet, dass** die zu beiden Seiten nach außen hervorstehende Wülste (38) auf den Stegen (26), vorzugsweise den die Öffnung (30) definierenden Kanten (28) der Stege (26), aufliegen.

12. Paneel nach einem der Ansprüche 8 bis 11,
**dadurch gekennzeichnet, dass** die zu beiden Seiten nach außen hervorstehenden Wülste (38) wenigstens abschnittsweise gegen die Stege (26) verstemmt sind.

13. Paneel nach einem der Ansprüche 8 bis 12,
**dadurch gekennzeichnet, dass** die Schiene (6) angrenzend zu den Stegen (26) der inneren Decklage (8) Taschen (36) zur Aufnahme von Klebstoff aufweist.

14. Paneel nach einem der Ansprüche 1 bis 13,
**dadurch gekennzeichnet, dass** die Rückseite der Schiene (6) im Paneel eingeschäumt ist.

15. Paneel nach einem der Ansprüche 1 bis 14,
**dadurch gekennzeichnet, dass** die Schiene (6) an ihrer Rückseite eine Kappe (40) zum Verschließen von Rasteröffnungen (20) aufweist.

## Claims

1. Panel, and in particular a side-wall panel (1), roof panel (2) and/or floor panel (3), for a box body (K) of a lorry (L), semi-trailer (A) and/or full trailer, having an inner layer (8), an outer layer (22), a foam-filled core region (24) arranged between the inner layer (8) and the outer layer (22), and at least one rail (6) for attaching additional items of equipment belonging to the box body (K), the rail (6) itself being directly fixed to the inner layer (8) by a separate connection made by positive interengagement, engagement by applied force and/or frictional engagement, **characterised in that** the rail (6) is fixed to the inner layer (8) by means of an adhesive by a connection made by bonding.

2. Panel according to claim 1, **characterised in that** rail (6) is fixed to the panel by positive interengagement by means of a non-releasable latched connection.

3. Panel according to claim 1 or 2, **characterised in that** the rail (6) is provided in an opening (30) in an inner layer (8) of the panel.

4. Panel according to claim 3, **characterised in that** the inner layer (8) of the panel has inward folded lips (26) and **in that** the rail (6) is fixed to the panel by means of the inward folded lips (26).

5. Panel according to claim 4, **characterised in that** the rail (6) is connected to the lips (26), and preferably to the inner faces of the lips (26), by bonding.

6. Panel according to claim 5, **characterised in that** the rail (6) has lugs (38) which project outwards on both sides and which project beyond the width of the opening (30).

7. Panel according to claims 4 to 6, **characterised in that** the lips (26) are folded round from the plane of the inner layer (8) of the panel by less than 90°, and **in that** the lips (26) approach one another as they become increasingly distant from the inner layer (8).

8. Panel according to any one of claims 4 to 7, **characterised in that** the rail (6) is connected to the lips (26) by positive interengagement, engagement by applied force and/or frictional engagement.

9. Panel according to claim 8, **characterised in that** the lips (26) have a pre-loading towards the rail (6).

10. Panel according to claim 8 or 9, **characterised in that** the lips (26) are non-releasably latched to the rail (6).

11. Panel according to any one of claims 8 to 10, **characterised in that** the lugs (38) which project outwards on both sides rest on the lips (26), and preferably on those edges (28) of the lips (26) which define the opening (30).

12. Panel according to any one of claims 8 to 11, **characterised in that** the lugs (38) which project outwards on both sides are, at least in sections, caulked with the lips (26).

13. Panel according to any one of claims 8 to 12, **characterised in that** the rail (6) has pockets (36) to receive adhesive adjacent to the lips (26) of the inner layer (8).

14. Panel according to any one of claims 1 to 13, **characterised in that** the rear face of the rail (6) is held in the panel by foam.

15. Panel according to any one of claims 1 to 14, **characterised in that**, on its rear face, the rail (6) has a cap (40) to close off grid openings (20).

## Revendications

1. Panneau, notamment panneau de paroi latérale (1), panneau de toit (2) et/ou panneau de sol (3), destiné à une carrosserie (K) d'un poids lourd (L), d'une semi-remorque (A) et/ou d'une remorque, comportant une couche de finition intérieure (8), une couche de finition (22) extérieure, une zone de noyau (24) garnie de mousse disposée entre la couche de finition intérieure (8) et la couche de finition extérieure (22) et au moins un rail (6) pour fixer des dispositifs annexes de la carrosserie (K), dans lequel le rail (6) même est directement fixé par l'intermédiaire d'une liaison séparée par conjonction de forme, conjonction de force et/ou conjonction par friction sur la couche de finition intérieure (8), **caractérisé en ce que** le rail (6) est fixé au moyen d'un adhésif par l'intermédiaire d'une liaison par conjonction de matière sur la couche de finition intérieure (8).

2. Panneau selon la revendication 1, **caractérisé en ce que** le rail (6) est fixé par l'intermédiaire d'une liaison par encliquetage imperdable par conjonction de forme sur le panneau.

3. Panneau selon les revendications 1 ou 2, **caractérisé en ce que** le rail (6) est prévu dans une ouverture (30) d'une couche de finition intérieure (8) du panneau.

4. Panneau selon la revendication 3, **caractérisé en ce que** la couche de finition intérieure (8) du panneau présente des gradins (26) courbés vers l'intérieur et **en ce que** le rail (6) est fixé par l'intermédiaire des gradins courbés vers l'intérieur (26) sur le panneau.

5. Panneau selon la revendication 4, **caractérisé en ce que** le rail (6) est relié aux gradins (26), de préférence aux côtés intérieurs des gradins (26), par conjonction de matière.

6. Panneau selon la revendication 5, **caractérisé en ce que** le rail (6) présente sur la largeur de l'ouverture (30) des bourrelets (38) dépassant vers l'extérieur des deux côtés.

7. Panneau selon les revendications 4 à 6, **caractérisé en ce que** les gradins (26) sont courbés par rapport au plan de la couche de finition intérieure (8) du panneau de moins de 90° et **en ce que** les gradins (26) se rapprochent les uns des autres avec un écart croissant par rapport à la couche de finition intérieure (8).

8. Panneau selon une des revendications 4 à 7, **caractérisé en ce que** le rail (6) est relié aux gradins (26) par conjonction de forme, conjonction de force et/ou conjonction de friction.

9. Panneau selon la revendication 8, **caractérisé en ce que** les gradins (26) présentent une précontrainte dans la direction des rails (6).

10. Panneau selon les revendications 8 ou 9, **caractérisé en ce que** les gradins (26) sont verrouillés au rail (6) de manière imperdable.

11. Panneau selon une des revendications 8 à 10, **caractérisé en ce que** les bourrelets (38) dépassant vers l'extérieur des deux côtés viennent reposer sur les gradins (26), de préférence les arêtes (28) des gradins (26) définies par l'ouverture (30).

12. Panneau selon une des revendications 8 à 11, **caractérisé en ce que** les bourrelets (38) dépassant vers l'extérieur des deux côtés sont calfatés au moins sur des portions contre les gradins (26).

13. Panneau selon une des revendications 8 à 12, **caractérisé en ce que** le rail (6) présente dans une zone attenante aux gradins (26) de la couche de finition intérieure (8) des poches (36) pour recevoir de l'adhésif.

14. Panneau selon une des revendications 1 à 13, **caractérisé en ce que** le côté arrière du rail (6) dans le panneau est garni de mousse.

15. Panneau selon une des revendications 1 à 14, **caractérisé en ce que** le rail (6) présente sur son côté arrière un capuchon (40) pour obturer les ouvertures d'encliquetage (20).
